# EUROPÄISCHE PATENTANMELDUNG

(11) **EP 2 546 114 A2**
(43) Veröffentlichungstag der Anmeldung: **16.01.2013**
(21) Anmeldenummer: 12175688.6
(22) Anmeldetag: 10.07.2012
(51) Int. Cl.: B60S 1/16, B60S 1/34

(54) **Scheibenwischvorrichtung für ein Kraftfahrzeug**

(30) Priorität: 12.07.2011 DE 102011078986
(71) Anmelder: ROBERT BOSCH GMBH, 70442 Stuttgart (DE)
(72) Erfinder: Scheller, Lothar, 76149 Karlsruhe (DE)

(57) **Zusammenfassung**

Scheibenwischvorrichtung (100) für ein Kraftfahrzeug, aufweisend einen Wischhebel (10) und einen Elektromotor, wobei der Wischhebel (10) mittels des Elektromotors direkt antreibbar ist, wobei der Wischhebel (10) ein Begrenzungselement (20) zu einer Drehwinkelbegrenzung aufweist. Die Scheibenwischvorrichtung (100) aufweist ein Fixierelement (30), wobei der Wischhebel (10) in einer Parklage mittels des Fixierelements (30) und des Begrenzungselements (20) fixierbar ist.

## Beschreibung

Die Erfindung betrifft eine Scheibenwischvorrichtung für ein Kraftfahrzeug. Weiterhin betrifft die Erfindung ein Verfahren zum Betreiben einer derartigen Scheibenwischvorrichtung.

### Stand der Technik

Unter einem herkömmlichen Wischerdirektantrieb versteht man eine Scheibenwischvorrichtung für ein Kraftfahrzeug, welche einen einzelnen Wischarm aufweist und von einem Elektromotor direkt angetrieben wird. Der Wischerdirektantrieb ist am Kraftfahrzeug in der Regel mittels dreier Befestigungspunkte fixiert und weist kein Zwischengestänge auf. Aufgrund des fehlenden Gestänges verfügt der Wischerdirektantrieb über keinerlei Selbsthemmung, weshalb zu einem Halten des Wischhebels (Wischarm plus Wischblatt) in einer Parkposition ein dauerndes Bestromen des Antriebsmotors erforderlich ist. Während eines Fahrbetriebs eines mit dem Wischerdirektantrieb ausgerüsteten Kraftfahrzeugs sollte ein Wischhebel in einer Parkposition durch ein aerodynamisch günstiges Design der Motorhaube unterstützt werden, damit der Wischhebel infolge von Fahrtwindkräften nicht aus der Parkposition herausgedrückt wird.

### Offenbarung der Erfindung

Es ist die Aufgabe der vorliegenden Erfindung, den bekannten Wischerdirektantrieb derart weiterzubilden, dass ein Betreiben des Wischerdirektantriebs in einer Parkposition verbessert ist.

Die Erfindung wird gelöst mittels einer Scheibenwischvorrichtung für ein Kraftfahrzeug, aufweisend einen Wischhebel und einen Elektromotor, wobei der Wischhebel mittels des Elektromotors direkt antreibbar ist, wobei der Wischhebel ein Begrenzungselement zu einer Drehwinkelbegrenzung aufweist. Die Scheibenwischvorrichtung zeichnet sich dadurch aus, dass die Scheibenwischvorrichtung ein Fixierelement aufweist, wobei der Wischhebel in einer Parklage mittels des Fixierelements und des Begrenzungselements fixierbar ist.

Vorteilhaft wird mittels des erfindungsgemäßen Fixierelements ermöglicht, dass in einem Zusammenwirken mit dem bereits vorhandenen Begrenzungselement zur Drehwinkelbegrenzung eine Fixierung des Wischhebels in einer Parklage erreicht wird. Dadurch kann vorteilhaft ein Design einer Motorhaube eines Kraftfahrzeugs, in welchem die erfindungsgemäße Scheibenwischvorrichtung verwendet wird, weitestgehend frei gestaltet sein und muss nicht auf aerodynamische Erfordernisse der Scheibenwischvorrichtung Rücksicht nehmen. Zudem ist es mittels der erfindungsgemäßen Scheibenwischvorrichtung vorteilhaft auch möglich, einen Wischhebel der Scheibenwischvorrichtung während eines Waschvorgangs in einer Waschstraße besser zu fixieren. Mittels der rein mechanischen Fixierung kann für die erfindungsgemäße Scheibenwischvorrichtung ein Dauerbestromen des direkt antreibenden Elektromotors vorteilhaft unterbleiben, wodurch Kohlebürsten weniger verschleißen und somit eine Lebendauer des Elektromotors verlängert sein kann.

Eine bevorzugte Ausführungsform der Scheibenwischvorrichtung sieht vor, dass das Fixierelement auf einer Motorplatine des Elektromotors angeordnet ist. Auf diese Weise wird das Fixierelement vorteilhaft in die erfindungsgemäße Scheibenwischvorrichtung integriert, so dass die erfindungsgemäße Scheibenwischvorrichtung für eine Parklagenfixierung des Wischhebels keinerlei zusätzliche Elemente benötigt.

Eine vorteilhafte Weiterbildung der erfindungsgemäßen Scheibenwischvorrichtung ist dadurch gekennzeichnet, dass das Fixierelement als ein federndes Element ausgebildet ist. Mittels des federnden Elements wird vorteilhaft eine Federschwelle bereitgestellt, die durch das Begrenzungselement vor dem Einrasten in die Parkposition überwunden werden muss. Auch ein Herausfahren aus der Parkposition ist nur durch ein Überwinden der Federschwelle möglich, wodurch eine sehr stabile Parklagenfixierung erzielt wird.

Eine vorteilhafte Weiterbildung der erfindungsgemäßen Scheibenwischvorrichtung sieht vor, dass das federnde Element U-förmig ausgebildet ist. Mittels der U-Form kann vorteilhaft eine Fixierung des Begrenzungselements in beide Bewegungsrichtungen des Wischhebels und dadurch eine verbesserte Parklagenfixierung bewirkt werden. Außerdem können mittels der U-Form Toleranzen eines Anschlags des Begrenzungselements am Fixierelement gut ausgeglichen werden.

Eine bevorzugte Ausführungsform der erfindungsgemäßen Scheibenwischvorrichtung sieht vor, dass zwei Schenkel der U-Form unterschiedlich lang ausgebildet sind. Dadurch kann vorteilhaft eine Federschwelle des Fixierelements für beide Bewegungsrichtungen des Wischhebels unterschiedlich dimensioniert und dadurch je Bewegungsrichtung auf unterschiedliche Kräfte auf den Wischhebel in der Parkposition Rücksicht genommen werden.

Eine bevorzugte Ausführungsform der erfindungsgemäßen Scheibenwischvorrichtung ist dadurch gekennzeichnet, dass das federnde Element zwei Blattfedern aufweist. Dadurch wird eine besonders einfache und leicht zu montierende Ausführungsform des Fixierelements bereitgestellt.

Die Erfindung wird nachfolgend anhand von mehreren Figuren detailliert beschrieben. Die Figuren dienen dabei vor allem dazu, die erfindungswesentlichen Prinzipien zu erläutern und sind nicht dazu gedacht, dass ihnen konkrete Konstruktionsmerkmale, Abmessungen oder irgendwelche anderen Parameter entnommen werden können.

In den Figuren zeigt:

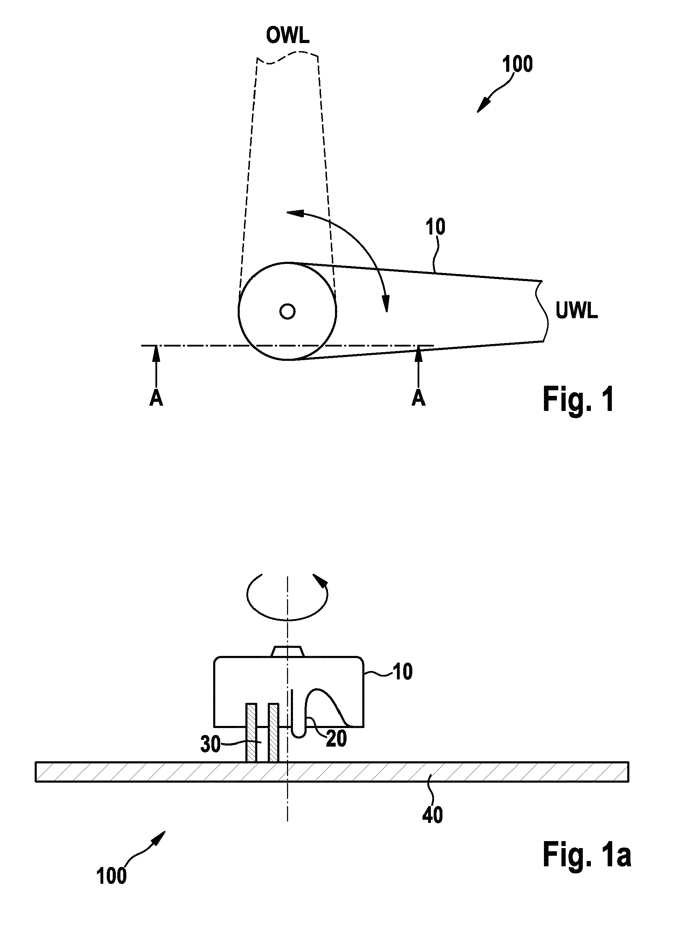

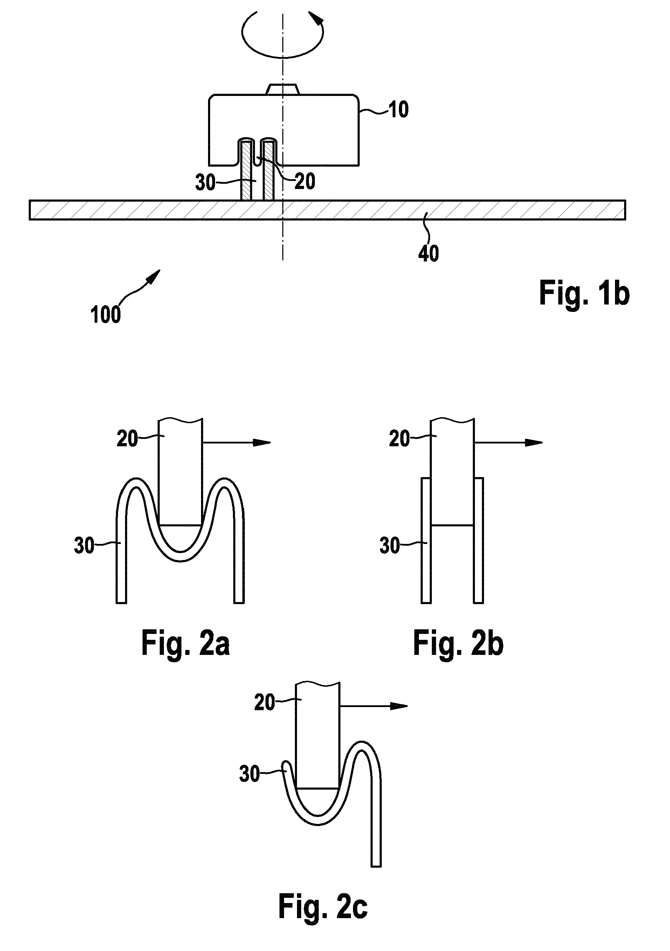

- Fig. 1: eine schematische Teilansicht einer Ausführungsform einer erfindungsgemäßen Scheibenwischvorrichtung;
- Fig. 1 a: eine Schnittansicht A-A der Scheibenwischvorrichtung von Figur 1;
- Fig. 1 b: eine weitere Schnittansicht A-A der Scheibenwischvorrichtung von Figur 1, wobei sich die Scheibenwischvorrichtung in Parklage befindet;
- Fig. 2a: eine Ausführungsform eines Fixierelements für die erfindungsgemäße Scheibenwischvorrichtung;
- Fig. 2b: eine weitere Ausführungsform eines Fixierelements für die erfindungsgemäße Scheibenwischvorrichtung; und
- Fig. 2c: eine weitere Ausführungsform eines Fixierelements für die erfindungsgemäße Scheibenwischvorrichtung.

Figur 1 zeigt stark vereinfacht eine Ausführungsform einer erfindungsgemäßen Scheibenwischvorrichtung 100, die als ein Wischerdirektantrieb ausgebildet ist. Ein Wischhebel 10 der Scheibenwischvorrichtung 100 ist zwischen einer oberen Wendelage (OWL) in der Nähe der A-Säule und einer unteren Wendelage (UWL) bewegbar, was durch einen bidirektionalen Winkelpfeil angedeutet ist. In der Figur ist der Wischhebel 10 in der unteren Wendelage dargestellt. Ein Elektromotor (nicht dargestellt) treibt den Wischhebel 10 der Scheibenwischvorrichtung 100 ohne Gestänge direkt an.

Aufgrund des fehlenden Gestänges weist die Scheibenwischvorrichtung 100 keinerlei Selbsthemmung auf, was bei einem konventionellen Wischerdirektantrieb bei einem Nichtbetrieb/Nichtbestromung der Scheibenwischvorrichtung 100 nachteiliger Weise eine unstabile, federnde Fixierung des Wischhebels 10 in einer Parklage zur Folge hätte. Die Parklage (in Figur 1 nicht dargestellt) ist um wenige Winkelgrade gegenüber der unteren Wendelage nach unten verdreht und wird mittels einer Steuersoftware der Scheibenwischvorrichtung 100 initiiert. Zu diesem Zweck erteilt die Software dem Wischhebel 10 die Anweisung, über die untere Wendelage hinaus langsam in die Parklage zu fahren. Erfindungsgemäß ist vorgesehen, dass zu einer Fixierung des Wischhebels 10 in der Parklage ein mechanisches Fixierelement 30 verwendet wird.

Figur 1 a zeigt eine Schnittansicht A-A durch die Scheibenwischvorrichtung 100 von Figur 1. Ein an einem Befestigungsteil (Verbindungsteil zwischen einer Wischerachse und einem Gelenkteil der Scheibenwischvorrichtung 100) des Wischhebels 10 angeordnetes Begrenzungselement 20, welches herkömmlicherweise zu einer Begrenzung eines Drehwinkels des Wischhebels 10 bezüglich einer A-Säule des Kraftfahrzeugs dient, ist dazu vorgesehen, dass es mit dem Fixierelement 30 zusammenwirkt. Figur 1 a zeigt die Scheibenwischvorrichtung 100 in der unteren Wendelage. Dabei ist das Begrenzungselement 20 nicht mittels des Fixierelements 30 fixiert. Eine Bewegungsrichtung des Wischhebels 10 aus der unteren Wendelage heraus (auf die obere Wendelage zu) ist mittels eines unidirektionalen Drehungspfeils angedeutet. Eine Leiterplatte bzw. Motorplatine 40, die an einer Karosserie des Fahrzeugs verschraubt ist und auf der eine elektronische Steuerschaltung (nicht dargestellt) für den Elektromotor angeordnet sind, dient vorzugsweise als ein mechanisches Befestigungsmittel für das Fixierelement 30. Das Fixierelement 30 kann mittels bekannter Verfahren an der Motorplatine 40 befestigt werden.

Figur 1b zeigt die Scheibenwischvorrichtung 100 nunmehr in einer Parklage des Wischhebels 10. Es ist erkennbar, dass das Begrenzungselement 20 in diesem Fall zwischen das Fixierelement 30 eingerastet ist, wobei das Fixierelement 30 als zwei Blattfedern ausgebildet ist. Auf diese Weise wird der Wischhebel 10 mittels des Fixierelements 30 im Wesentlichen unbewegbar gehalten, sodass eine gewisse mechanische Kraft auf den Wischhebel 10 in Richtung auf die untere Wendelage hin ausgeübt werden kann, ohne dabei den Wischhebel 10 aus der Parkposition zu bewegen. Das Einfahren des Wischhebels 10 in die dargestellte Parklage erfolgt mittels herkömmlicher Software zur Ansteuerung der Scheibenwischvorrichtung 100. Vorteilhaft sind dadurch keinerlei Modifikationen für die Steuerungssoftware der Scheibenwischvorrichtung 100 erforderlich. Falls der Wischhebel 10 aus der Parkposition herausgefahren werden soll, gibt die Steuerungssoftware einen entsprechenden Befehl an die Scheibenwischvorrichtung 100, so dass der Wischhebel 10 die Federkraft des Fixierelements 30 überwindet und in Richtung der unteren Wendelage bzw. darüber hinaus bewegt wird, was einer Bewegung des Wischhebels 10 gemäß dem Drehrichtungspfeil von Figur 1b entspricht.

Aus einem Vergleich der Figuren 1 a und 1b wird also erkennbar, dass das Begrenzungselement 20 immer nur in Parklage des Wischhebels 10 in das Fixierelement 30 einrastet. In einem regulären Wischbetrieb der Scheibenwischvorrichtung 100 hat das Fixierelement 30 keinerlei Funktion. Dadurch wird das Fixierelement 30 vor unnötiger Abnützung bewahrt.

Die Figuren 2a bis 2c zeigen, jeweils zusammen mit einem Begrenzungselement 20 eines Wischhebels 10 in Parklage, verschiedene Ausführungsformen eines Fixierelements 30 für die erfindungsgemäße Scheibenwischvorrichtung 100. Dargestellt ist das Fixierelement 30 mit dem Begrenzungselement 20 in einer Parkposition des Wischhebels 10, wobei das Begrenzungselement 20 mittels des Fixierelements 30 im Wesentlichen in beide möglichen Bewegungsrichtungen des Wischhebels 10 fixiert ist. Eine Bewegungsrichtung des Begrenzungselements 20 bzw. des Wischhebels 10 aus der Parklage heraus, auf die untere bzw. obere Wendelage hin, ist jeweils durch einen Pfeil angedeutet. Man erkennt, dass zum Halten des Wischhebels 10 in der Parkposition keinerlei zusätzlicher Aufwand nötig ist. Einzige Bedingung für die Fixierung des Wischhebels 10 in Parkposition ist, dass die auf den Wischhebel 10 wirkende Kraft kleiner ist als eine physikalische Federkonstante bzw. Federschwelle des Fixierelements 30.

Figur 2a zeigt eine weitere Ausführungsform des Fixierelements 30, welches als ein U-förmiges, federndes Element mit zwei Befestigungsstützen ausgebildet ist. Die beiden Befestigungsstützen können zum Befestigen des Fixierelements 30 in der Motorplatine 40 verwendet werden.

Figur 2b zeigt, ebenso wie die Figuren 1 a und 1 b, die Ausführungsform des Fixierelements 30 in Form von zwei Blattfedern für die erfindungsgemäße Scheibenwischvorrichtung 100. Man erkennt, dass das Begrenzungselement 20 und damit der Wischhebel 10 mittels der beiden Blattfedern im Wesentlichen unbewegbar in der Parkposition des Wischhebels 10 gehalten wird. Die Ausführungsform des Fixierelements 30 als zwei Blattfedern ist eine besonders einfach zu gestaltende, welche hinsichtlich Auslegung und Dimensionierung vorteilhaft besonders geringe Anforderungen stellt und dadurch besonders kostengünstig ist.

Figur 2c zeigt eine weitere Ausführungsform des Fixierelements 30 für die erfindungsgemäße Scheibenwischvorrichtung 100. In diesem Fall wird das U-förmige Fixierelement 30 mittels einer einzelnen Befestigungsstütze befestigt. Dadurch ist das Fixierelement 30 besonders einfach an einem einzelnen Befestigungsort der Motorplatine 40 (nicht dargestellt) befestigbar.

Für die Ausführungsformen gemäß Figur 2a und Figur 2c sowie für die Ausführungsform gemäß Figur 2b können die beiden Schenkel der U-Form bzw. die beiden Blattfedern unterschiedlich lang ausgebildet sein, wodurch unterschiedliche Federschwellen für eine Bewegung des Wischhebels 10 aus der Parkposition heraus bzw. in die Parkposition hinein erreichbar ist. Auf diese Art und Weise können unterschiedliche Designs von Motorhauben berücksichtigt werden, bei denen je nach individuellem Design unterschiedliche Windkräfte auf den Wischhebel 10 der Scheibenwischvorrichtung 100 einwirken, so dass unter Umständen unterschiedlich große Haltekräfte des Fixierelements 30 zum Halten des Wischarms 10 in der Parkposition erforderlich sind. In der Regel wird nach dem Einnehmen der Parklage keine Kraft auf den Wischhebel 10 in Richtung über die Parklage hinaus ausgeübt, so dass der jeweils linke Schenkel der Ausführungsformen von Figur 2a bis 2c schwächer bzw. kürzer als der jeweils rechte Schenkel dimensioniert werden kann. Die U-Form der Fixierelemente 30 gemäß Figur 2a und 2c begünstigt zudem einen Ausgleich von Bauteiltoleranzen des Begrenzungselements 20.

Zusammenfassend wird mit der Erfindung eine einfach zu realisierende, mechanische Fixierung eines Wischhebels einer als Wischerdirektantrieb ausgebildeten Scheibenwischvorrichtung vorgeschlagen. Mittels der mechanischen Fixierung des Wischhebels in der Parklage kann vorteilhaft eine Dauerbestromung des Wischermotors während der Fahrt oder in einer Waschstraße unterbleiben. Dadurch kann vorteilhaft eine hohe Belastung der Ankerlamellen des Wischermotors, mit daraus resultierendem hohem Verschleiß bzw. einer Unwucht des Rotors, vermieden werden. Vorteilhaft kann ein Anwender der erfindungsgemäßen Scheibenwischvorrichtung ein beliebiges, in der Regel vorgegebenes, Motorhaubendesign verifizieren, ohne während der Fahrt aerodynamische Einflüsse der Motorhaube auf die Scheibenwischvorrichtung berücksichtigen zu müssen. Dadurch kann vorteilhaft die Lebensdauer des Antriebsmotors beträchtlich verlängert sein.

Die Erfindung macht sich die Tatsache zunutze, dass ein Befestigungsteil des Wischhebels herkömmlicherweise bereits vorhanden ist, das als eine Sicherungseinrichtung in Form eines Begrenzungselements ausgebildet ist, welches zu einer Drehwinkelbegrenzung des Wischhebels gegenüber einer A-Säule des Fahrzeugs dient. Durch Anbringen eines mit dem Begrenzungselement zusammenwirkenden Fixierelements an einem geeigneten Ort, kann vorteilhaft der Wischhebel in beide möglichen Bewegungsrichtungen fixiert werden, wodurch der Wischhebel auch bei ungünstigen äusseren Bedingungen, wie beispielsweise bei Fahrtwind oder während eines Waschvorgangs in einer Waschstraße, stabil in Parklage gehalten werden kann. Durch diese bidirektionale Fixierung werden vorteilhaft auch Drehrichtungsänderungen von rotierenden Waschbürsten während des Waschvorgangs und dadurch verursachte Kraftrichtungsänderungen auf den Wischhebel berücksichtigt.

Bei einer Betätigung der Scheibenwischvorrichtung in der Parklage wird der Motor bestromt und die Federkraftschwelle des Fixierelements wird durch das Motormoment überwunden, wodurch der Wischhebel seinen regulären Wischbetrieb startet. Aufgrund der Tatsache, dass die untere Wendelage nicht der Parklage entspricht, muss somit während des Wischbetriebs die Federschwelle des Fixierelements nicht überwunden werden, so dass eine Abnutzung des Fixierelements sehr effizient und schonend erfolgt. Bei einem Abschalten der Scheibenwischvorrichtung fährt der Wischhebel wiederum in die Parkposition und überwindet neuerlich die Federkraft des Fixierelements, wodurch die Fixierung erneut hergestellt ist.

Es versteht sich von selbst, dass fachmännische Abwandlungen der oben beschriebenen Ausführungsformen der Erfindung möglich sind. Insbesondere ist es denkbar, dass das Fixierelement in geeigneter Weise alternativ ausgestaltet ist und an einem alternativen Befestigungsort befestigt werden kann.

## Patentansprüche

1. Scheibenwischvorrichtung (100) für ein Kraftfahrzeug, aufweisend einen Wischhebel (10) und einen Elektromotor, wobei der Wischhebel (10) mittels des Elektromotors direkt antreibbar ist, wobei der Wischhebel (10) ein Begrenzungselement (20) zu einer Drehwinkelbegrenzung aufweist, **dadurch gekennzeichnet, dass** die Scheibenwischvorrichtung (100) ein Fixierelement (30) aufweist, wobei der Wischhebel (10) in einer Parklage mittels des Fixierelements (30) und des Begrenzungselements (20) fixierbar ist.

2. Scheibenwischvorrichtung nach Anspruch 1, **dadurch gekennzeichnet, dass** das Fixierelement (30) auf einer Motorplatine (40) des Elektromotors angeordnet ist.

3. Scheibenwischvorrichtung nach Anspruch 1 oder 2, **dadurch gekennzeichnet, dass** das Fixierelement (30) als ein federndes Element ausgebildet ist.

4. Scheibenwischvorrichtung nach Anspruch 3, **dadurch gekennzeichnet, dass** das federnde Element U-förmig ausgebildet ist.

5. Scheibenwischvorrichtung nach Anspruch 4, **dadurch gekennzeichnet, dass** zwei Schenkel der U-Form unterschiedlich lange ausgebildet sind.

6. Scheibenwischvorrichtung nach Anspruch 3, **dadurch gekennzeichnet, dass** das federnde Element zwei Blattfedern aufweist.

7. Verfahren zum Betreiben einer Scheibenwischvorrichtung nach einem der Ansprüche 1 bis 6, wobei der Wischhebel (10) in einer Parklage mittels eines am Wischhebel (10) angeordneten Begrenzungselements (20) und eines Fixierelements (30) fixiert wird.
